# EUROPÄISCHE PATENTANMELDUNG

(11) **EP 1 628 120 A1**
(43) Veröffentlichungstag der Anmeldung: **22.02.2006**
(21) Anmeldenummer: 05012981.6
(22) Anmeldetag: 16.06.2005
(51) Int. Cl.: G01M 3/02, G01M 3/32, G01M 3/26

(54) **Verfahren und Prüfanordnung zur Dichtigkeitsmessung**

(30) Priorität: 20.08.2004 DE 102004040355
(71) Anmelder: Bayer GmbH Maschinenfabrik, 73730 Esslingen (DE)
(72) Erfinder: Bayer, Werner, 73732 Esslingen (DE)
(74) Vertreter: Bregenzer, Michael

(57) **Zusammenfassung**

Die Erfindung betrifft ein Verfahren und eine Prüfanordnung (10) zur Dichtigkeitsmessung eines Innenraums (13) eines Hohlkörpers (14), wobei in dem Innenraum (13) während der Dichtigkeitsmessung mindestens ein poröses Element (31) angeordnet ist, mit den Schritten:
- Anordnen des mindestens einen porösen Elements (31) in dem Innenraum (13),
- Verschließen des Innenraums (13),
- Befüllung und Druckbeaufschlagung des Innenraums (13) mit einem gasförmigen Druckmedium,
- Druckverlustmessung und/oder Leckratenmessung des Innenraums (13) während einer Messphase, um die Druckdichtigkeit des Hohlkörpers (14) zu ermitteln, und
- Sättigung des mindestens einen porösen Elements (31) mit einer Flüssigkeit (34) vor der Durchführung der Druckverlustmessung und/oder der Leckratenmessung.

## Beschreibung

Die Erfindung betrifft ein Verfahren zur Dichtigkeitsmessung eines Innenraums eines Hohlkörpers, wobei in dem Innenraum während der Dichtigkeitsmessung mindestens ein poröses Element angeordnet ist, mit den Schritten:
- Anordnen des mindestens einen porösen Elements in dem Innenraum,
- Verschließen des Innenraums,
- Befüllung und Druckbeaufschlagung des Innenraums mit einem gasförmigen Druckmedium, und
- Druckverlustmessung und/oder Leckratenmessung des Innenraums während einer Messphase, um die Druckdichtigkeit des Hohlkörpers zu ermitteln.

Die Erfindung betrifft ferner eine Prüfanordnung zur Durchführung eines solchen Verfahrens.

Bei der Dichtigkeitsmessung wird der Hohlkörper mit Überdruck beaufschlagt, um eventuelle Undichtigkeiten zu ermitteln. Der Hohlkörper ist beispielsweise ein Druck- oder Spritzgussteil, insbesondere ein Motorblock eines Verbrennungsmotors. Beim Druck- oder Spritzgießen können feine, zu Undichtigkeiten führende Kanäle entstehen. Bei dem porösen Element handelt es sich beispielsweise um ein Sintermetallbauteil, insbesondere um ein Lagerbauteil. Derartige Sintermetallteile werden bei beispielsweise als Lagerschalen, als Ventilführungen oder dergleichen verwendet.

Aus der deutschen Offenlegungsschrift DE 35 21 792 A1 ist beispielsweise ein Zylinder-Gehäuse einer Brennkraftmaschine bekannt, die zur Kühlflüssigkeitszufuhr einen Ringkanal aufweist, der mit flüssigkeitsdurchlässigem, insbesondere öldurchlässigem Material gefüllt ist. Es wird vorgeschlagen, ein Sintermetall zu verwenden. Damit die Kühlflüssigkeit nicht verloren geht, soll der Ringkanal dicht sein. Eine poröse Zylinderwandung aus Sintermetall für einen Automotor ist ferner aus der US-Patentschrift 6,224,989 B1 bekannt.

Die deutsche Patentschrift DE 43 07 283 C2 betrifft eine Vorrichtung zum Prüfen von porösen Rohren auf Dichtigkeit, bei der ein Prüfling beispielsweise mit Wasser befüllt wird. Der Vorgang des Befüllens mit Wasser wird während der Messung fortgesetzt, wobei das nachfließende Wasser teilweise zum "Nachfüllen" von Poren erforderlich ist, aber auch ein Indiz für Undichtigkeiten des Prüflings bildet.

Das US-Patent 5,245,859 betrifft ein Verfahren zur Bestimmung eines Schwelldruckes bzw. eines kritischen Kapillardruckes eines porösen Stein-Prüflings. Der Prüfling wird mit einem Fluid befüllt bzw. das Fluid wird evakuiert, wobei die Messung vorgenommen wird. Der Prüfling ist stromaufwärts und stromabwärts jeweils an ein Fluid-Reservoir angeschlossen. Es wird der Differenzdruck zwischen der Stromaufwärts-Seite des Prüflings und der Stromabwärts-Seite des Prüflings gemessen.

Eine Sättigungsmessung eines porösen Materials ist ferner aus dem US-Patent 4,381,665 bekannt. Ein poröses Material enthält flüssige Kohlenwasserstoffe. Eine nicht lösbare Ersatz-Flüssigkeit wird in das poröse Material gepumpt, um die flüssigen Kohlenwasserstoffe zu ersetzen. Die Menge des ersetzten flüssigen Kohlenwasserstoffes wird gemessen.

Die europäische Patentanmeldung EP 1 333 266 A1 betrifft ein System zur Leckagenmessung industrieller Komponenten, beispielsweise von Motorblöcken. Ein Roboter ist zur Förderung der industriellen Komponenten zu mindestens zwei Leckage-Messeinheiten vorhanden.

Ein Sintermetallteil hat sehr kleine Poren und Zwischenräume, die sich während einer Dichtigkeitsmessung, d.h. bei der Druckbeaufschlagung zunächst mit dem Druckmedium, insbesondere mit Druckluft füllen. Es muss eine lange Zeit abgewartet werden, bis stabile Druckverhältnisse in dem zu prüfenden Innenraum vorherrschen, das heißt bis das oder die porösen Sintermetallelemente mit der Druckluft gesättigt sind. Somit ist die Verfahrensdauer bei dem herkömmlichen Verfahren sehr lange.

Als eine Lösung ist denkbar, die Druckmessung nicht von innen nach außen, sondern von außen nach innen durchzuführen. Der Innenraum, in dem sich die porösen Elemente befinden, wird dabei verschlossen und von außen mit Druck beaufschlagt. Dann wird durch entsprechende Leckagemessung oder Druckdifferenzmessung festgestellt, ob das Druckmedium in den Innenraum eindringt. Ein Nachteil ist dabei, das die Prüfanordnung verhältnismäßig große Ausmaße aufweist, da ein Druckbehälter notwendig ist, der den gesamten Hohlkörper aufnehmen kann. Ferner entspricht die Druckmessung nicht den tatsächlichen, beim späteren Betrieb bzw. bei der späteren Verwendung des Hohlkörpers auftretenden Druckverhältnisse. Wenn nämlich später der Innenraum mit Druck beaufschlagt wird, kann es um die Druckdichtigkeit anders bestellt sein als bei der zuvor vorgenommenen Druckdichtigkeitsmessung von außen. Der Hohlkörper kann beispielsweise bei Druckbeaufschlagung von außen her druckdicht sein, wohingegen er beispielsweise bei Druckbeaufschlagung von innen undicht ist. Mit der bekannten Messmethode ist es nicht möglich, sicher festzustellen, ob der Hohlkörper von innen her druckdicht ist, bzw. eine Leckrate des Hohlkörpers zuverlässig zu ermitteln.

Es ist daher die Aufgabe der vorliegenden Erfindung, ein schnelles, effizientes und möglichst messgenaues Verfahren und eine entsprechende Prüfanordnung zur Dichtigkeitsmessung eines Innenraums eines Hohlkörpers bereitzustellen.

Zur Lösung der Aufgabe wird eine Sättigung des mindestens einen porösen Elements mit einer Flüssigkeit vor der Durchführung der Druckverlustmessung und/oder der Leckratenmessung vorgeschlagen. Die erfindungsgemäße Prüfanordnung ist zur Durchführung des erfindungsgemäßen Verfahrens ausgestaltet.

Das mindestens eine poröse Element ist vorteilhafterweise ganz oder teilweise ein Sintermetallbauteil. Bei dem Element handelt es sich vorteilhafterweise um ein Lagerelement, z.B. eine Lagerschale für eine Kurbelwelle, eine Ventilführung oder dergleichen. Der Hohlkörper ist vorteilhafterweise ein Druck- oder Spritzgussteil. Der Hohlkörper ist beispielsweise ein Motorblock oder ein Motorbestandteil, z.B. ein Kurbelwellengehäuse, ein Zylinderkopf oder dergleichen. Der Hohlkörper wird beispielsweise aus einer Aluminiumlegierung gegossen und/oder gespritzt.

Das durch die Flüssigkeit bereits gesättigte poröse Element nimmt während der Druckverlustmessung oder Leckratenmessung das gasförmige Medium, bei dem es sich zweckmäßigerweise um Druckluft handelt, nicht oder nur in einem unwesentlichen Umfang auf. Dadurch sind die Druckverhältnisse, sofern der Innenraum druckdicht ist, im wesentlichen konstant, so dass zuverlässig festgestellt werden kann, ob der Innenraum druckdicht ist oder nicht. Das poröse Element bzw. die porösen Elemente können abseits von dem Hohlkörper, das heißt im noch nicht montierten Zustand, bereits mit der Flüssigkeit gesättigt werden. Es versteht sich, dass auch eine Sättigung der Elemente im am Hohlkörper montierten Zustand mit geeigneten Vorrichtungen denkbar ist.

Das erfindungsgemäße Verfahren ist bei der eigentlichen Dichtigkeitsmessung im wesentlichen gleich schnell wie das bekannte Verfahren, sofern bei diesem keine porösen Elemente verwendet werden.

Zweckmäßigerweise wird nach der Befüllung und Druckbeaufschlagung des Innenraums mit dem gasförmigen Druckmedium eine Stabilisierungsphase abgewartet. Während dieser Stabilisierungsphase gleichen sich die Druckverhältnisse in dem Innenraum aus bzw. stellen sich stabile thermische Verhältnisse ein.

Wenn das poröse Element nicht mit der Flüssigkeit gesättigt wäre, müsste man etwa zwei bis dreimal länger warten, bis sich stabile Druckverhältnisse in dem Innenraum einstellen. Eine typische Stabilisierungsphase dauert z.B. etwa 8 bis 15 Sekunden. Befinden sich im Innenraum nicht erfindungsgemäß gesättigte poröse Elemente, dauert es etwa 30 bis 40 Sekunden, unter Umständen auch länger, bis diese porösen Elemente mit Luft sozusagen gefüllt sind. Erst dann kann die eigentliche Stabilisierungsphase anfangen. Die Messphase, während der die Druckverlustmessung bzw. Leckratenmessungen durchgeführt wird, dauert dann etwa 4 bis 8 Sekunden. Das Befüllen des Innenraums dauert typischerweise 7 bis 12 Sekunden. Bei nicht gesättigten porösen Elementen müsste man den Innenraum etwa drei bis viermal länger mit dem Druckmedium befüllen wie bei erfindungsgemäß gesättigten porösen Elementen, um im Innenraum stabile Druckverhältnisse herzustellen.

Es hat sich als vorteilhaft herausgestellt, die porösen Elemente unter Unterdruck, insbesondere im Vakuum, mit der Flüssigkeit zu sättigen bzw. zu tränken. Dabei wird in den porösen Elementen befindliche Luft sozusagen herausgesaugt, so dass die Flüssigkeit in die porenartigen Hohlräume, insbesondere kapillaren Hohlräume, nachströmen kann. Ansonsten wäre es möglich, dass z.B. Kapillareffekte ein Eindringen der Flüssigkeit in die porösen Elemente verhindert.

Prinzipiell denkbar ist es auch, das poröse Element unter Überdruck mit der Flüssigkeit zu sättigen, wobei man die Flüssigkeit sozusagen in das Element einpresst.

Eine weitere Variante der Erfindung sieht vorteilhafterweise vor, dass das poröse Element z.B. unter Durchfluss der Sättigungs-Flüssigkeit oder beispielsweise anhand eines durchfließenden, die Flüssigkeit sozusagen in das Element eindrückenden oder einpressenden Druckmediums gesättigt wird.

Zweckmäßigerweise wird eine Messung der dem mindestens einen porösen Element entnommenen Luft vorgenommen. Anhand der ausströmenden Luftmenge, die während des Sättigungsvorganges geringer wird, wird der Sättigungszustand des Elements mit der Flüssigkeit ermittelt.

Vorzugsweise lässt man den Sättigungsvorgang eine vorbestimmte Zeit dauern, um auf diesem Wege sicherzustellen, dass eine ausreichende Sättigung vorhanden ist.

Eine denkbare Variante der Erfindung kann vorsehen, dass nur äußere Schichten des porösen Elementes gesättigt werden, wohingegen innere Bereiche des Elementes zumindest teilweise Luft enthalten. Die bereits mit der Flüssigkeit gesättigten äußeren Bereiche des Elements verhindern, dass während der Dichtigkeitsmessung Druckluft oder ein sonstiges Druckmedium in den inneren Bereich des Elementes vordringen, so dass dennoch eine zuverlässige Dichtigkeitsmessung des Innenraums des Hohlkörpers möglich ist.

Eine weitere Möglichkeit, das Eindringen der Flüssigkeit in das poröse Element zu verbessern besteht zweckmäßigerweise darin, die Flüssigkeit zu erhitzen. Dadurch wird die Viskosität bzw. das Fließverhalten der Flüssigkeit verbessert. Als vorteilhafte Flüssigkeit verwendet man beispielsweise Öl, insbesondere Motorenöl. Zweckmäßig ist es dabei, ein hochviskoses Motorenöl zu verwenden. Wenn es sich bei dem Hohlkörper im einen Bestandteil eines Motorblocks handelt, hat das in das poröse Element eingebrachte Öl zudem vorteilhafte Schmiereffekte, wobei beispielsweise eine Notlaufeigenschaft des Motors verbessert wird. Prinzipiell kann die zur Sättigung des porösen Elements verwendete Flüssigkeit auch z.B. eine Schneidflüssigkeit sein, die bei einer späteren maschinellen Nachbearbeitung des Elements vorteilhaft ist.

Nachfolgend wird ein Ausführungsbeispiel der Erfindung anhand der Zeichnung erläutert. Es zeigen:

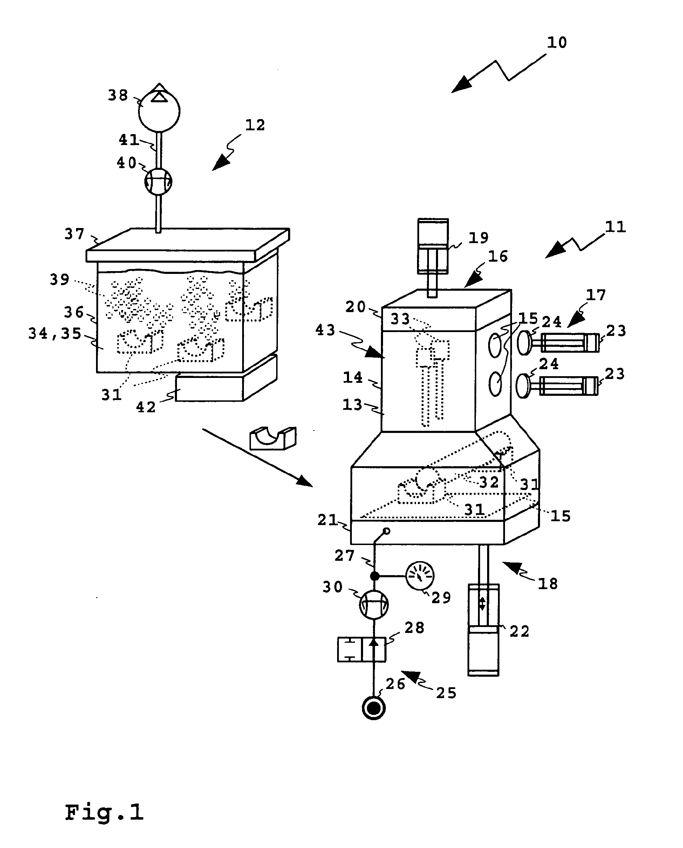

- Figur 1: eine schematisch dargestellte erfindungsgemäße Prüfanordnung mit einer erfindungsgemäßen Sättigungsvorrichtung sowie einer Messvorrichtung,

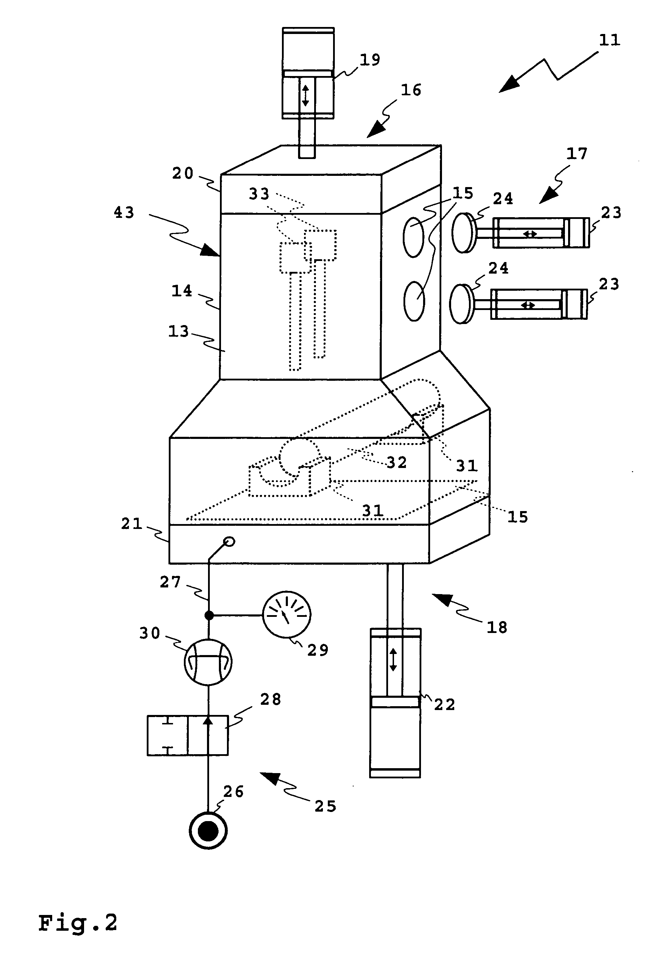

- Figur 2: die Messvorrichtung gemäß Figur 1 in größerer Darstellung und

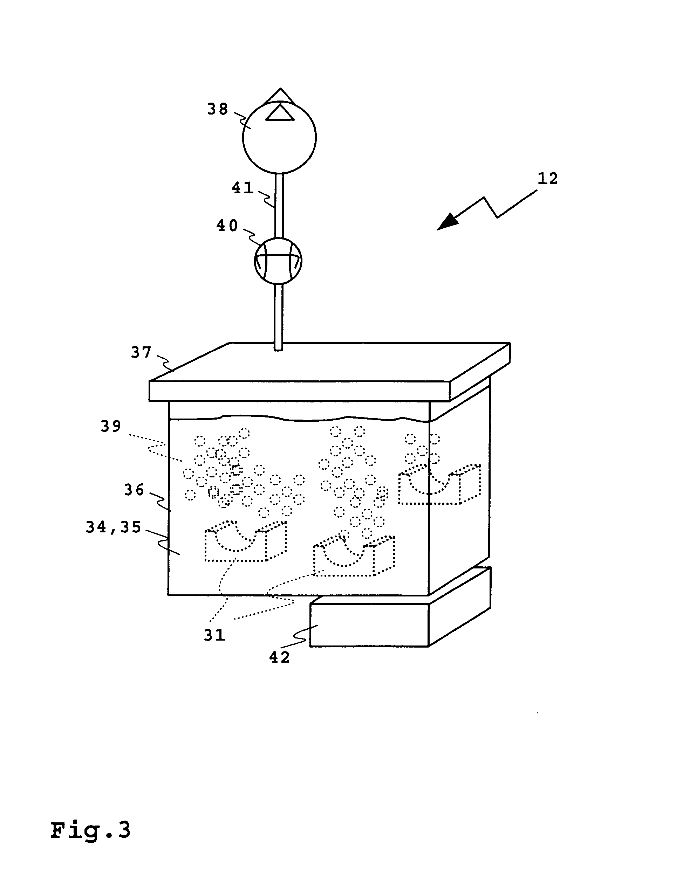

- Figur 3: die Sättigungsvorrichtung in größerer Darstellung.

Eine Prüfanordnung 10 zur Dichtigkeitsmessung eines Innenraums 13 eines Hohlkörpers 14 enthält eine Messvorrichtung 11 sowie eine Sättigungsvorrichtung 12. Nach dem erfindungsgemäßen Verfahren kommt vor der Messvorrichtung 11 die Sättigungsvorrichtung 12 zum Einsatz. Zunächst wird aber die Messvorrichtung 11 erläutert.

Der Hohlkörper 14 ist beispielsweise ein Motorblock eines Verbrennungsmotors 43 oder ein Bauteil davon, z.B. ein Zylinderkopf, ein Kurbelwellengehäuse, beispielsweise ein sogenannter short block, ein darunter zu montierendes Gehäusebauteil, beispielsweise eine bed plate, oder dergleichen. Der Hohlkörper 14 wird beispielsweise gegossen, insbesondere druck- oder spritzgegossen, z.B. aus einer Aluminiumlegierung. Beim Druckgießen bzw. Spritzgießen können feine Kanäle entstehen, die vom Innenraum 13 nach außen führen, so dass der Innenraum 13 nicht druckdicht ist. Beim späteren Betrieb des Motors 43 tritt dann an diesen Stellen ein Druckverlust auf, bzw. es tritt Motoröl aus dem Motorblock aus. Das Werkstück, im vorliegenden der Hohlkörper 14, ist daher bereits bei der Fertigung auf Dichtigkeit zu überprüfen, um später auftretende Qualitätsprobleme zu vermeiden. Hierfür ist die Prüfanordnung 10 vorgesehen.

Die Prüfanordnung 10 enthält eine an sich bekannte Messvorrichtung 11, mit der der Innenraum 13 mit Überdruck beaufschlagbar ist. Sodann wird mit der Messvorrichtung 12 beispielsweise zeitabhängig ein Druckverlauf ermittelt, um eine eventuelle Leckage zu ermitteln. Beispielsweise wird eine Differenzdruckmessung vorgenommen.

### Der Messvorgang verläuft folgendermaßen:

Zunächst werden Öffnungen 15 des Hohlkörpers 14 mit Hilfe von Verschlusseinrichtungen 16 bis 18 verschlossen. Die Verschlusseinrichtung 16 enthält beispielsweise einen Linearantrieb 19, der eine obere Öffnung 15 des Hohlkörpers 14 mit einer oberen Deckplatte 20 verschließt. Der Linearantrieb 19 ist beispielsweise ein pneumatischer oder hydraulischer Zylinder, ein Elektroantrieb oder dergleichen. In ähnlicher Weise verschließt die Verschlusseinrichtung 18 eine untere Öffnung 15 am Hohlkörper 14 mit einer Verschlussplatte 21, die einen Linearantrieb 22 gegen die untere Öffnung 15 drückt. Linearantriebe 23 pressen Verschlussplatten 24 gegen seitliche Öffnungen 15 am Hohlkörper 14. An den Verschlussplatten 20, 21 und 24 sind zweckmäßigerweise nicht dargestellte Dichtungen vorgesehen. Sodann ist der Innenraum 13 druckdicht verschlossen.

Mit einer Befüllungseinrichtung 25 wird der Innenraum 13 dann mit einem gasförmigen Druckmedium, zweckmäßigerweise mit Druckluft, befüllt und mit einem Überdruck beaufschlagt. Beim Ausführungsbeispiel strömt aus einer Druckluftquelle 26 Druckluft über eine Leitung 27 in den Innenraum 13. Die Leitung 27 führt beispielsweise zur unteren Verschlussplatte 21, so dass über die untere Verschlussplatte 21 die Druckluft in den Innenraum 13 einströmt. Der Befüllungsvorgang bzw. der Druckluftbeaufschlagungsvorgang dauert beispielsweise 7 bis 12 Sekunden.

Dann wird beispielsweise mit Hilfe eines Sperrventils 28 die Leitung 27 vorteilhafterweise gesperrt. Dann beginnt eine Abgleich- bzw. Beruhigungsphase oder Stabilisierungsphase, die zur Einstellung gleichmäßiger Druck- und Temperaturverhältnisse im Innenraum 13 dient. Die Stabilisierungsphase dauert beispielsweise 8 bis 15 Sekunden.

Dann beginnt eine Messphase, bei der beispielsweise mit einer Druckmesseinrichtung 29 gemessen wird, ob die Druckverhältnisse im Innenraum 13 konstant oder zumindest im wesentlichen konstant bleiben. Beispielsweise ist ein Druckabfall von etwa 1 bis 10 Pascal akzeptabel, um den Hohlkörper 14 als druckdicht bzw. flüssigkeits-druckdicht einzustufen. Die Messphase dauert beispielsweise 4 bis 8 Sekunden.

Bei der Messvorrichtung 11 ist alternativ zu dem dargestellten Differenzdruckmessverfahren auch ein Durchfluss- oder Leckratenmessverfahren möglich, bei der während der Messphase Druckmedium gegebenenfalls nachgefüllt wird, um einen gleichmäßigen Druck im Innenraum 13 zu erhalten. Das Sperrventil 28 bleibt dabei offen, so dass während der Messphase Druckluft von der Druckluftquelle 26 über die Leitung 27 in den Innenraum 13 nachströmen kann. Eine in die Leitung 27 geschaltete Durchflussmesseinrichtung 30, die beispielsweise dass Durchflussvolumen bzw. den und/oder den Durchflussstrom misst, misst dabei z.B. die Menge des nachgefüllten Druckmediums.

Auf diesem Wege wird festgestellt, ob der Innenraum 13 druckdicht ist oder ob beispielsweise über Undichtigkeiten an den Wandungen des Hohlkörpers 14 Druckluft entweichen kann.

Diese an sich bekannte Messungen sind jedoch in der gewünschten schnellen Taktzeit bei dem Hohlkörper 14 mit bekannter Technik nicht möglich. Der Hohlkörper 14 enthält nämlich eines oder mehrere poröse Elemente in Gestalt von Sintermetallbauteilen 31. Die Sintermetallbauteile 31 sind beispielsweise Lagerschalen, die von unten her an den Hohlkörper 14 angeschraubt werden und zur Lagerung einer Kurbelwelle 32 dienen. In der Zeichnung sind nur zwei Lagerschalen dargestellt. In der Praxis sind mehr Lagerschalen, z.B. 5 - 7, mit einer entsprechend hohen Luftaufnahmekapazität vorhanden. Die Kurbelwelle 32 wird von Kolben 33 über nicht dargestellte Pleuel angetrieben. Bei der oben erläuterten Druckdichtigkeitsmessung sind die Lagerschalen 31 bereits am Hohlkörper 14 montiert. Die Phase der Druckbeaufschlagung müsste verhältnismäßig lange dauern, um diese Lagerschalen 31 mit Druckluft sozusagen zu sättigen. Damit der Vorgang der Druckluftbeaufschlagung jedoch verkürzt wird, ist erfindungsgemäß eine vorgeschaltete Sättigung der porösen Elemente mit einer Flüssigkeit 34, z.B. mit Öl 35 vorgesehen.

Die Bauteile 31 werden beispielsweise in einen Behälter 36 eingetaucht, in dem sich das Öl 35 befindet. Sodann wird der Behälter 36 mit einem Verschlussdeckel 37 druckdicht oder zumindest im wesentlichen druckdicht verschlossen. Mit Hilfe einer Vakuumerzeugungsvorrichtung 38, beispielsweise einer Vakuumpumpe, wird sodann ein Vakuum im Innenraum des Behälters 36 erzeugt. Eine Leitung 41 durchdringt den Verschlussdeckel 37 und führt zur Vakuumerzeugungsvorrichtung 38. In den Bauteilen 31 befindliche Luft wird aus diesen sozusagen herausgesaugt oder herausgezogen, wobei Luftblasen 39 aus den Bauteilen 31 nach oben aufsteigen. Das Öl 35 dringt in die Bauteile 31 ein und sättigt diese.

Nun würde es prinzipiell ausreichen, eine vorbestimmte Zeitspanne zu warten, bis die Bauteile 31 gesättigt sind. Es besteht aber auch die Möglichkeit, den Sättigungsvorgang sozusagen zu überwachen. Beispielsweise könnte man mittels einer Sichtprüfung feststellen, in welcher Menge (noch) Luftblasen 39 aus den Bauteilen 31 austreten. Beim Ausführungsbeispiel ist zur Überwachung des Sättigungsvorgangs zweckmäßigerweise eine Durchflussmesseinrichtung 40 in die Leitung 41 geschaltet ist. Wenn die Bauteile 31 mit der Flüssigkeit 34 gesättigt sind, nimmt die aus diesen Bauteilen entziehbare Luftmenge messbar ab oder erreicht einen niedrigen Wert, z.B. einen von der Durchflussmesseinrichtung 40 ermittelbaren Schwellwert. Dieser Zustand ist mit der Durchflussmesseinrichtung 40 erfassbar, so dass diese bei Erreichen des Schwellwerts z.B. ein akustisches und/oder optisches Signal ausgibt, das signalisiert, dass die Bauteile 31 mit dem Öl 35 gesättigt sind.

Zur Verbesserung des Fließverhaltens des Öls 35 ist ferner eine Erhitzungseinrichtung 42, z.B. eine elektrische Heizung, vorgesehen, die beispielsweise unterhalb des Behälters 36 angeordnet ist und das darin befindliche Öl 35 erhitzt.

Die durch die Sättigungsvorrichtung 12 mit der Flüssigkeit 34 gesättigten Bauteile 31 werden dann in den Innenraum 13 des Hohlkörpers 14 eingebracht, dort beispielsweise mit nicht dargestellten Schrauben befestigt. Sodann wird die oben beschriebene Druckdichtigkeitsmessung vorgenommen.

Es versteht sich, dass die vorliegende Druckdichtigkeitsmessung im Grunde genommen bei jedem beliebigen Hohlkörper vorgenommen werden kann, der einen Innenraum mit einem porösen Element, insbesondere einem Sintermetallelement, aufweist.

Es hat sich herausgestellt, dass die in der Sättigungsvorrichtung 12 mit der Flüssigkeit 34 gesättigten Bauteile durchaus auch eine längere Zeit vor dem Einbau in den Innenraum 13 gelagert werden können. Verwendet man beispielsweise Öl, diffundiert dieses aus den porösen Sintermetallbauteilen nicht oder nur unwesentlich, so dass die Druckdichtigkeitsmessung auch nach einigen Tagen Lagerzeit noch möglich ist.

Bei dem Öl 35 handelt es sich vorzugsweise um ein Motoröl, mit dem später der Motor 43 betrieben wird. Der Motor 43 hat dann vorteilhafterweise bereits Notlaufeigenschaften.

Die erfindungsgemäße Druckdichtigkeitsmessung erfolgt von innen nach außen, was den entsprechenden Normen für die Druckdichtigkeitsmessung entspricht.

Zudem ermöglicht es die erfindungsgemäße Messmethode, dass die Druckdichtigkeit der Verschlusseinrichtungen 16 bis 18 im Bereich der Öffnungen 15 überprüfbar ist. Beispielsweise wird im Kontaktbereich der Verschlusseinrichtungen 16 bis 18 an den jeweiligen Öffnungen 15 eine Leckageflüssigkeit aufgebracht, die z.B. eine Seifenflüssigkeit oder dergleichen enthält. Wenn die Verschlusseinrichtungen 16 bis 18 die Öffnungen 15 dicht verschließen, kann bei der Druckbeaufschlagung des Innenraums 13 keine Luft an den Randbereichen bzw. Kontaktbereichen entweichen. Ist der Verschluss jedoch nicht in gewünschter Weise dicht, führt aus dem Innenraum 13 an den Öffnungen 15 austretende Luft zur Blasenbildung bei der Leckflüssigkeit, so dass diese Undichtigkeit erkennbar ist.

## Patentansprüche

1. Verfahren zur Dichtigkeitsmessung eines Innenraums (13) eines Hohlkörpers (14), wobei in dem Innenraum (13) während der Dichtigkeitsmessung mindestens ein poröses Element (31) angeordnet ist, mit den Schritten:
- Anordnen des mindestens einen porösen Elements (31) in dem Innenraum (13),
- Verschließen des Innenraums (13),
- Befüllung und Druckbeaufschlagung des Innenraums (13) mit einem gasförmigen Druckmedium, und
- Druckverlustmessung und/oder Leckratenmessung des Innenraums (13) während einer Messphase, um die Druckdichtigkeit des Hohlkörpers (14) zu ermitteln,
**gekennzeichnet durch**,
- Sättigung des mindestens einen porösen Elements (31) mit einer Flüssigkeit (34) vor der Durchführung der Druckverlustmessung und/oder der Leckratenmessung.

2. Verfahren nach Anspruch 1, **gekennzeichnet durch** Sättigung des mindestens einen porösen Elements (31) mit der Flüssigkeit (34) unter Unterdruck, insbesondere Vakuum, und/oder Überdruck und/oder unter Durchfluss der Flüssigkeit (34) oder eines Druckmediums.

3. Verfahren nach Anspruch 2, **gekennzeichnet durch** Messung der dem mindestens einen porösen Element (31) entnommenen Luft zur Ermittlung des Sättigungszustandes des mindestens einen porösen Elements (31) mit der Flüssigkeit (34).

4. Verfahren nach einem der vorhergehenden Ansprüche, **gekennzeichnet durch** Erhitzen der Flüssigkeit (34) zur Sättigung des mindestens einen porösen Elements (31) mit der Flüssigkeit (34).

5. Verfahren nach einem der vorhergehenden Ansprüche, **dadurch gekennzeichnet, dass** eine Stabilisierungsphase, die nach der Befüllung und Druckbeaufschlagung des Innenraums (13) mit dem gasförmigen Druckmedium abgewartet wird, kürzer ist als eine Sättigungsphase des mindestens einen porösen Elements (31) mit dem gasförmigen Druckmedium, wenn das mindestens eine poröse Element (31) anstelle der Flüssigkeit (34) mit dem gasförmigen Druckmedium gesättigt wird.

6. Verfahren nach einem der vorhergehenden Ansprüche, **dadurch gekennzeichnet, dass** die Flüssigkeit (34) zur Sättigung des mindestens einen porösen Elements (31) ein Öl (35), insbesondere ein Motoröl, und/oder eine Schneidflüssigkeit (34) umfasst.

7. Verfahren nach einem der vorhergehenden Ansprüche, **gekennzeichnet durch** Sättigung des mindestens einen porösen Elements (31) abseits von dem Hohlkörper (14).

8. Verfahren nach einem der vorhergehenden Ansprüche, **dadurch gekennzeichnet, dass** das mindestens eine poröse Element (31) zumindest teilweise ein Sintermetallbauteil ist.

9. Verfahren nach einem der vorhergehenden Ansprüche, **dadurch gekennzeichnet, dass** der Hohlkörper (14) ein Motorblock oder Bestandteil eines Verbrennungsmotors ist.

10. Verfahren nach einem der vorhergehenden Ansprüche, **dadurch gekennzeichnet, dass** das gasförmige Druckmedium Druckluft ist.

11. Verfahren nach einem der vorhergehenden Ansprüche, **gekennzeichnet durch** Prüfen der Druckdichtigkeit mindestens einer Verschlussvorrichtung zum Verschließen einer Öffnung (15) des Hohlkörpers (14) während der Druckverlustmessung und/oder der Leckratenmessung.

12. Prüfanordnung zur Dichtigkeitsmessung eines Innenraums (13) eines Hohlkörpers (14) gemäß dem Verfahren nach einem der vorhergehenden Ansprüche, wobei in dem Innenraum (13) der Dichtigkeitsmessung mindestens ein poröses Element (31) angeordnet ist,
- mit einer Verschlusseinrichtung (16-18) zum Verschließen des Innenraums (13),
- mit einer Befüllungseinrichtung (25) zur Befüllung und Druckbeaufschlagung des Innenraums (13) mit einem gasförmigen Druckmedium, und
- mit einer Druckmesseinrichtung (29) zur Druckverlustmessung und/oder einer Durchflussmesseinrichtung (30) zur Leckratenmessung des Innenraums (13) während einer Messphase, um die Druckdichtigkeit des Hohlkörpers (14) zu ermitteln, **gekennzeichnet durch**
- eine Sättigungsvorrichtung (12) zur Sättigung des mindestens einen porösen Elements (31) mit einer Flüssigkeit (34) vor der Durchführung der Druckverlustmessung und/oder der Leckratenmessung, wobei die Sättigungsvorrichtung (12) einen Behälter (36) zur Aufnahme der Flüssigkeit (34) und des mindestens einen porösen Elements (31) aufweist.

13. Prüfanordnung nach Anspruch 12, **dadurch gekennzeichnet, dass** der Behälter (36) im Wesentlichen druckdicht verschließbar ist, und dass die Sättigungsvorrichtung (12) eine Vakuumerzeugungsvorrichtung (38) zur Erzeugung eines Unterdrucks und/oder eine Druckerzeugungsvorrichtung zur Erzeugung eines Überdrucks in dem Behälter (36) aufweist.

14. Prüfanordnung nach Anspruch 12 oder 13, **dadurch gekennzeichnet, dass** die Sättigungsvorrichtung (42) eine Erhitzungseinrichtung zum Erhitzen der Flüssigkeit (34) aufweist.
